# EUROPEAN PATENT APPLICATION

(11) **EP 4 653 405 A1**
(43) Date of publication of application: **26.11.2025**
(21) Application number: 24305806.2
(22) Date of filing: 23.05.2024
(51) Int. Cl.: C04B 28/28, C09D 5/34, C09K 3/12, E02D 3/12, E02D 19/16

(54) **METHOD FOR SEALING A LEAKING UNDERGROUND STRUCTURE**

(71) Applicant: Saint-Gobain Weber France, 94370 Sucy en Brie (FR)
(72) Inventor: HERMANT, Fabien, 93300 Aubervilliers (FR); CEDANO SERRANO, Francisco Javier, 93300 Aubervilliers (FR); KEMPENAERS, Peter, 52005 Heist-op-den-Berg (BE); LIEKENS, Jan, 52005 Heist-op-den-Berg (BE)
(74) Representative: Saint-Gobain Recherche

(57) **Abstract**

The present invention relates to a method for sealing a leaking underground structure comprising:
i) injecting a composition into a water leak of the leaking underground structure, and
ii) contacting said composition with water of the water leak,
wherein said composition comprises a cationic polyelectrolyte, an anionic polyelectrolyte, a watersoluble mineral salt, and water.

## Description

High-waterflow underground leaks require very fast setting systems. Standard chemistries used today comprise cement or injection resins based on a one-component polyurethane, a two-component polyurethane or a two-component polyurea-modified polyurethane.

In many cases, cement is the first choice, because of its low cost. However, in case of high water flows under high pressure, cement will be washed out and will not cure, and certainly not in the area to be sealed. An unsuccessful injection of cement in a leak will cause a pollution of the environment with high amounts of uncured, alkaline, cement grout.

One-component polyurethane ("1C-PU") injection resins have the advantage to be easy to work with. The system consists of a polyurethane injection resin, made of prepolymers that only need water to give the final curing to a polyurethane polymer. An accelerator is usually added to decrease the reaction time, because the isocyanate-water reaction is rather slow. However, at higher water flows and lower temperature, even with an accelerator, 1C-PU injection resins can still be displaced because the reaction induction is not fast enough - typically more than 5 seconds - and the curing will take place at a distance from the injection point. This implies that the injected amounts needed to seal the leak are higher than theoretically required. Alternate techniques were developed to overcome this issue, for instance by adding cement to the 1C-PU injection resin, in order to increase the density of the injected mixture and decrease the distance the seal will be displaced. However, this adds complexity to the application and the obtained result remains non-optimal.

Two-component polyurethane ("2C-PU") injection resins, which comprise a polyisocyanate component and a polyol component, are also used for sealing leaks in underground structures. The advantage of this type of products is that the reaction times are faster than with 1C-PU injection resins, because the reaction of the isocyanate with polyol is faster than the reaction of isocyanate with water. However, when these products are injected in high water flows, at low temperature, the system still needs an induction time to start the reaction, during which it can be displaced. An additional disadvantage is that during the induction time, part of the injected resin can react with water, resulting in an incompletely cured product.

Two-component polyurea-modified polyurethane injection resins contain a fraction of amines in the polyol part, resulting in an immediate partial curing, resulting in a very high viscosity slurry, that is more difficult to be displaced by a high water flow. However, this type of systems is still very sensitive to low temperatures and the displacement remains possible.

Therefore, there remains a need to provide a method for sealing a leaking underground structure, using an effective injection composition which is highly reactive even under high water flows and at low temperatures.

In this context, the inventors have demonstrated that the above-mentioned limitations could be overcome by using an aqueous composition comprising a cationic polyelectrolyte, an anionic polyelectrolyte, and a water-soluble mineral salt.

It is known that when an aqueous solution of an anionic polyelectrolyte (also called hereafter "polyanion") and an aqueous solution of a cationic polyelectrolyte (also called hereafter "polycation") are mixed together, the polyelectrolytes will immediately associate and form a solid complex (polyelectrolyte complex) that will separate from the aqueous phase. When the aqueous polymer solutions contain water-soluble mineral salts in a sufficient amount to at least partially screen the opposite charges of the polymers, the attraction between the polyanion and polycation will be reduced and formation of a solid complex be prevented. Upon mixing of such solutions, one will observe phase separation with, on the one hand, a concentrated polymer-rich phase, called "coacervate", and, on the other hand, a polymer-depleted supernatant phase. A detailed description of this phenomenon can be found for example in Wang et al, "The Polyelectrolyte Complex/Coacervate Continuum", Macromolecules, 2014, 47, 3108-3116. Such polyelectrolyte coacervates or polyelectrolyte complexes will be referred to hereafter as PEC (PolyElectrolyte Complex/Coacervate).

Surprisingly, the inventors have demonstrated that, upon contact of a coacervate composition with water flowing from a leaking underground structure, an immediate setting of such composition with very low displacement could be reached, even under high water flows and/or low temperature.

### SUMMARY

Hence, the present invention relates to a method for sealing a leaking underground structure comprising:
i) injecting a composition into a water leak of the leaking underground structure, and
ii) contacting said composition with water of the water leak,
wherein said composition comprises a cationic polyelectrolyte, an anionic polyelectrolyte, a water-soluble mineral salt, and water.

In some embodiments, the underground structure is selected from:
- tunnels such as subway tunnels, utility tunnels, microtunnels, road or rail traffic tunnels,
- parkings, train stations, subway stations,
- basements, building foundations,
- shafts, and
- galleries in mines.

In some embodiments, said injecting is carried out at an injection pressure from 1 to 200 bar, preferably from 1 to 50 bar.

In some embodiments, the water pressure of the water leak is from 1 to 200 bar, preferably from 1 to 20 bar.

In some embodiments, the water-soluble mineral salt is selected from the group consisting of alkaline metal or alkaline earth metal halogenides.

In some embodiments, the weight ratio of the total amount of cationic polyelectrolyte and anionic polyelectrolyte to the amount of water-soluble mineral salt is comprised between 0.10 and 4.0, preferably between 0.50 and 2.50, more preferably between 0.80 and 1.50.

In some embodiments, said composition further comprises a water-soluble polyphenol comprising at least one polyhydroxylated aromatic ring structure, and optionally a water-soluble polyvalent transition metal salt.

In some embodiments, the polyphenol comprises at least two, for instance at least three, polyhydroxylated aromatic ring structures, said polyphenol being preferably tannic acid.

In some embodiments, the ratio of the number of positive charges of the cationic polyelectrolyte to the number of negative charges of the anionic polyelectrolyte in the composition is comprised between 0.5 and 2.0, preferably between 0.6 and 1.8, more preferably between 0.7 and 1.6, even more preferably between 0.9 and 1.2.

In some embodiments, the cationic and anionic polyelectrolytes together represent from 1 % to 45 %, preferably from 2 % to 40 %, more preferably from 3 % to 40 %, even more preferably from 4 to 40 %, more particularly from 5 % to 35 %, for instance from 8 % to 30% of the total weight of the composition. In some embodiments, the cationic polyelectrolyte is selected from the group consisting of poly(diallyldimethylammonium chloride) (PDADMAC), poly[ (2-hydroxypropyl)dimethylammonium chloride], polyamidoamine-epichlorhydrine (PAAE), polyethyleneimine, poly(acrylamide-co-diallyldimethylammonium chloride), copolymer of hydroxyethylcellulose and poly(diallyldimethylammonium chloride) (Polyquaternium-4), copolymer of acrylamide and dimethylaminoethylmethacrylate quaternized with dimethyl sulphate (Polyquaternium-5), copolymer of dimethylaminomethyle methacrylate and alkyl methacrylate, chitosan, poly(quaternized N,N-(dimethylamino)ethyle methacrylate), guar hydroxypropyltrimonium chloride, poly(N,N-dimethyl-3,5-dimethylene piperidinium chloride), poly(vinylbenzyltrimethylammonium chloride), poly[3-(methacryloylamino)propyl-trimethylammonium chloride], poly([2-(methacryloloxy)ethyl]-trimethylammonium chloride), polyvinylamine (PVA), poly(N,N-dimethyl-3,5-dimethylene piperidinium chloride) (PDDPC), poly(vinylbenzyltrimethylammonium chloride) (PVBTAC), poly(allylamine chloride) (PAH), poly[3-(methacryloylamino)propyltrimethylammonium chloride] (PMAPTAC), and cationic dextran.

In some embodiments, the anionic polyelectrolyte is selected from the group consisting of the salts, preferably sodium salts, of poly(acrylic acid), poly(acrylic acid-co-acrylamido), poly(4-styrene-sulfonic acid), lignosulfonic acid, humic acid, alginic acid, poly(2-acrylamido-2-methyl-1-propanesulfonic acid), hyaluronic acid, poly(vinylsulfonic acid), and dextran-sulfate.

In some embodiments, the composition has a water content of from 15 to 80 % by weight, preferably of from 20 to 75 % by weight, more preferably of from 25 to 70 % by weight.

In some embodiments, the composition further comprises particulate fillers, the amount of particulate filler being preferably comprised between 5 % and 80 % by weight, preferably between 10 and 70 % by weight, more preferably between 15 and 60 % by weight, with respect to the total dry weight of the composition.

In some embodiments, the composition further comprises particles of organic polymer, the organic polymer preferably being selected from acrylic polymers, styrene-acrylic polymers, styrene-butadiene polymers, chloroprene, natural rubber and polyvinyl acetal polymers, and the ratio of the amount of organic polymer to the total amount of cationic and anionic polyelectrolytes being preferably comprised between 0.5/1 and 7/1, more preferably between 0.5/1 and 5/1, even more preferably between 0.7/1 and 3/1, more particularly between 1/1 and 2/1.

In some embodiments, the composition further comprises an emulsion of a hydrophobic agent selected from paraffin wax, polyethylene wax, polypropylene wax, silicone wax and poly(tetrafluoroethylene) wax.

### DETAILED DESCRIPTION

The composition used in the method of the present invention comprises a cationic polyelectrolyte, an anionic polyelectrolyte, a water-soluble mineral salt, and water.

The composition used in the method of the present invention comprises advantageously similar amounts of a cationic polyelectrolyte and an anionic polyelectrolyte, "similar amounts" meaning here that these two types of polyelectrolytes of opposite charges are used in respective amounts such that the ratio of the number of positive charges of the polycation to the number of negative charges on the polyanion is comprised between 0.5 and 2.0, preferably between 0.6 and 1.8, more preferably between 0.7 and 1.6 and still more preferably between 0.8 and 1.4, or even between 0.9 and 1.2.

The term "a cationic polyelectrolyte" encompasses one cationic polyelectrolyte but also mixtures of two or more cationic polyelectrolytes. The term "an anionic polyelectrolyte" encompasses one anionic polyelectrolyte, but also mixtures of two or more anionic polyelectrolytes.

The polyelectrolytes may be strong or weak polyelectrolytes. A strong polyelectrolyte is a polymer with a net positive or net negative charge that is essentially independent of the pH of the composition.

In particular, the zeta potential of a strong cationic polyelectrolyte is positive for any pH in the range from 1 to 14 and the zeta potential of a strong anionic polyelectrolyte is negative for any pH in the range from 1 to 14. The zeta potential can be measured using a zeta potential analyzer (e.g. "zetasizer" device) at a suitable concentration (generally greater than 0.01%, for example 1% by weight of polyelectrolyte relative to the volume of solution analyzed) and generally at 20°C.

Strong cationic polyelectrolytes are for example polymers comprising a plurality of quaternized amine groups; strong anionic polyelectrolytes are for example polymers comprising a plurality of sulfonate (-SO₃⁻ groups). Poly(acrylic acid) is an example of a weak anionic polyelectrolyte and non-quaternized polyamines are examples of weak cationic polyelectrolytes, because their net charge is dependent of the pH.

Preferably, at least one of said anionic polyelectrolyte and said cationic polyelectrolyte is a strong polyelectrolyte.

More preferably, the anionic polyelectrolyte and the cationic polyelectrolyte are both strong polyelectrolytes.

In the present invention, an anionic polyelectrolyte is a polymer with a net negative charge at pH 7 and a cationic polyelectrolyte is a polymer with a net positive charge at pH 7. This does not mean that an anionic polyelectrolyte comprises only negative charges and is free of positive charges. By analogy, cationic polyelectrolytes may comprise both cationic and anionic charges as long as, at pH 7, the overall net charge is positive.

Consequently, the definition of anionic polyelectrolytes encompasses zwitterionic polyelectrolytes having an isoelectric point (pl) < 7, preferably < 6, and the definition of cationic polyelectrolytes encompasses zwitterionic polyelectrolytes having an isoelectric point (pl) > 7, preferably > 8. The most commonly known zwitterionic polyelectrolytes are proteins or peptides comprising both pending carboxyl groups (-COOH) and pending amino groups (-NH₂).

In a preferred embodiment, the anionic polyelectrolyte comprises only negative charges and is free of positive charges, and the cationic polyelectrolyte comprises only positive charges and is free of negative charges.

The anionic polyelectrolyte and the cationic polyelectrolyte preferably are linear, non-branched polymers.

The cationic groups of the cationic polyelectrolyte are for example primary, secondary, or tertiary amino groups or quaternized amine groups, located in the main chain of the polymer or on pending groups.

The anionic groups of the anionic polyelectrolyte are for example selected from the group consisting of carboxylate, sulphonate, phosphonate, boronate, sulphate, borate, and phosphate groups, located in the main chain of the polymer or on pending groups thereof.

The cationic polyelectrolyte is preferably selected from the group consisting of:
- poly(diallyldimethylammonium chloride) (PDADMAC),
- poly[ (2-hydroxypropyl)dimethylammonium chloride],
- polyamidoamine-epichlorhydrine (PAAE),
- polyethyleneimine,
- poly(acrylamide-co-diallyldimethylammonium chloride),
- copolymer of hydroxyethylcellulose and poly(diallyldimethylammonium chloride) (Polyquaternium-4),
- copolymer of acrylamide and dimethylaminoethylmethacrylate quaternized with dimethyl sulphate (Polyquaternium-5, CAS 26006-22-4),
- copolymer of dimethylaminomethyl methacrylate and alkyl methacrylate
- chitosan,
- poly(quaternized N,N-(dimethylamino)ethyle methacrylate),
- guar hydroxypropyltrimonium chloride,
- poly(N,N-dimethyl-3,5-dimethylene piperidinium chloride),
- poly(vinylbenzyltrimethylammonium chloride),
- poly[3-(methacryloylamino)propyl-trimethylammonium chloride],
- poly([2-(methacryloloxy)ethyl]-trimethylammonium chloride),
- polyvinylamine (PVA),
- poly(N,N-dimethyl-3,5-dimethylene piperidinium chloride) (PDDPC),
- poly(vinylbenzyltrimethylammonium chloride) (PVBTAC),
- poly(allylamine chloride) (PAH),
- poly[3-(methacryloylamino)propyltrimethylammonium chloride] (PMAPTAC), and
- cationic dextran.

The anionic polyelectrolyte preferably is selected from the group consisting of the salts, preferably sodium salts, of poly(acrylic acid), poly(acrylic acid-co-acrylamido), poly(4-styrene-sulfonic acid), lignosulfonic acid, humic acid, alginic acid, poly(2-acrylamido-2-methyl-1-propanesulfonic acid), hyaluronic acid, poly(vinylsulfonic acid), and dextran-sulfate.

The weight average molecular weight (determined by light scattering) of the anionic and cationic polyelectrolytes is typically comprised between 5000 and 2 000 000 Da, preferably between 10 000 and 1500 000 Da, more preferably between 20 000 and 1000 000 Da, even more preferably between 50 000 and 700 000 Da, for instance between 100 000 and 500 000 Da.

The anionic polyelectrolyte and cationic polyelectrolyte preferably have similar molecular weights.

The ratio of the weight average molecular weight of the anionic polyelectrolyte to the weight average molecular weight of the cationic polyelectrolyte is preferably comprised between 0.4 and 1.6, more preferably between 0.7 and 1.3 and still more preferably between 0.8 and 1.2.

The cationic polyelectrolytes and anionic polyelectrolytes together preferably represent from 1 % to 45 %, more preferably from 2% to 40 %, even more preferably from 3 % to 40 %, more particularly from 4 % to 40 %, even more particularly from 5 % to 35 %, for instance from 8 % to 30 % of the total weight of the composition. For very high molecular weight molecular weights the lower limit may be about 1 % by weight of the composition.

The composition further comprises a water-soluble mineral salt. As used herein, "water-soluble" means having a solubility in distilled water at 20°C of more than 100 g/L, preferably more than 200 g/L, even more preferably more than 300 g/L.

Such water-soluble mineral salt is preferably selected from the group consisting of alkaline metal or alkaline earth metal halogenides. Preferred alkaline metal are lithium, sodium and potassium. Preferred alkaline earth metal are calcium and magnesium. Preferred halogenides are chlorides and bromides. The function of the water-soluble mineral salt is to screen the opposite charges and to thereby reduce the ionic interaction between the polyelectrolytes, to prevent the formation of a solid insoluble polyelectrolyte complex and to allow the formation of a coacervate (a viscous polyelectrolyte-rich solution). The water-soluble mineral salt preferably is a monovalent metal salt, i.e. an alkaline metal halogenide. Alkaline earth metal salts, when present, preferably do not represent more than 20 mol % of the total mineral salts.

The suitable amount of water-soluble mineral salt depends on the total amount of polyelectrolyte charges, i.e. for a given molecular weight of the polyelectrolytes, it is roughly proportional to the amount of polyelectrolytes in the composition.

The amount of water-soluble mineral salt is typically comprised between 40% and 95 % by weight, preferably between 55 % and 75 % by weight, with respect to the total dry weight of cationic polyelectrolyte, anionic electrolyte and water-soluble mineral salt.

The weight ratio of the total amount of cationic polyelectrolyte and anionic polyelectrolyte to the total amount of water-soluble mineral salt is preferably comprised between 0.10 and 4.0, more between 0.50 and 2.50, and still more preferably between 0.80 and 1.50.

The above amount and ratio may also depend to a certain extent on the molecular weight of the polyelectrolyte. The higher the weight average molecular weight of the polyelectrolytes, the more water-soluble mineral salt will be necessary to achieve a suitably low viscosity of the aqueous composition.

The composition may further comprise a water-soluble polyphenol comprising at least one polyhydroxylated aromatic ring structure, optionally in combination with a water-soluble polyvalent transition metal salt. Such polyphenol can have beneficial effect on the physico-chemical and/or mechanical properties of the final materials.

The amount of polyphenol, or polyphenols, should be comprised between 0.02 % and 1.0 % by weight, preferably between 0.02 % and 0.5%, more preferably between 0.03 % and 0.5 % by weight, even more preferably between 0.04 % and 0.1 % by weight, with respect to the aqueous composition.

When expressed with respect to the dry weight of the composition, the total amount of polyphenol(s) is comprised between 0.001 % and 0.5 % by weight, preferably between 0.01 and 0.25 % by weight, more preferably between 0.05 and 0.5 % by weight or between 0.02 and 0.1 % by weight.

The term "polyphenol" refers to an organic compound comprising at least one polyhydroxylated aromatic ring structure, "polyhydroxylated" meaning comprising two hydroxyls on the same aromatic ring.

In a preferred embodiment, at least part of the polyphenols used in the composition comprise more than one polyhydroxylated aromatic ring structure, i.e. at least two, preferably at least three, and more preferably at least four polyhydroxylated aromatic ring structures.

The polyhydroxylated aromatic ring structures are preferably selected from the groups consisting of catechol groups, pyrogallol groups, tetrahydroxylated aromatic ring structures and pentahydroxylated aromatic ring structures.

In a particularly interesting embodiment, the polyphenol is tannic acid.

Recently, synthetic organic polymers comprising comonomers with polyhydroxylated ring structures have been described (see for example the work of Cheng et al., in Nature Communications, 13, article number 1892 (2022)). This type of polymer of course would also very efficiently reinforce the final seals obtained from the composition.

In another preferred embodiment of the present invention, the polyphenol is a synthetic copolymer comprising comonomers with polyhydroxylated ring structures, preferably a copolymer of styrene and of a comonomer selected from dihydroxystyrene, trihydroxystyrene, tetrahydroxystyrene and pentahydroxystyrene.

The polyphenol(s) may be associated with polyvalent transition metal ions. In an embodiment, the composition therefore further comprises a water-soluble polyvalent transition metal salt or a mixture of polyvalent transition metal salts, preferably in a total amount comprised between 0.001 and 0,1 %, more preferably between 0.002% and 0.05%, even more preferably between 0.005 and 0.05%, with respect to the total weight of the composition.

When expressed with respect to the water-soluble polyphenol, the weight ratio of the transition metal salt to the dry weight of the polyphenol is typically comprised between 0.1 and 0.2, preferably between 0.12 and 0.18.

The transition metals are preferably selected from the group consisting of Fe, Zn, Co, Cu, and V. Halogenides, in particular chlorides and bromides, are preferred anions of the reinforcing transition metal salts used in the present invention.

The composition may further comprise a particulate filler.

The amount of particulate filler is generally comprised between 5 % and 80 % by weight, preferably between 10 and 70 % by weight, and more preferably between 15 and 60 % by weight, with respect to the total dry weight of the composition.

The particulate filler may be a mineral filler, preferably a mineral filler selected from calcium carbonate, barium sulfate, clay, talcum, dolomite, mica, silica sand, crushed basalt, kaolin, wollastonite, and laponite.

The mean particle size of the filler is generally comprised between 0.04 and 140 µm, preferably between 0.1 and 10 µm, still more preferably between 0.2 and 5 µm.

The composition further may comprise significant amounts of "soft", water-insoluble organic polymer particles having glass transition temperatures below room temperature, preferably below 0°C. The addition of such soft organic polymers improves impact resistance and helps to prevent cracking of the final cured material.

The organic polymer preferably is selected from acrylic polymers, styrene-acrylic polymers, styrene-butadiene polymers, chloroprene, natural rubber (e.g. deproteinized natural rubber) and polyvinyl acetal polymers (e.g. polyvinyl butyral). In a preferred embodiment, the organic polymer is natural rubber (e.g. deproteinized natural rubber). The dry weight ratio of the amount of organic polymer particles to the total amount of cationic and anionic polyelectrolytes typically is comprised between 0.5/1 and 7/1, preferably between 0.5/1 and 5/1, more preferably between 0.7/1 and 3/1, even more preferably between 0.7/1 and 2.5/1, for instance between 1/1 and 2/1.

The organic polymer particles are generally commercialized as waterborne (or equivalently "aqueous") dispersions or solventborne (e.g. alcoholic) dispersions. When adding such waterborne (or "aqueous") or solventborne dispersions as an ingredient to the composition, the skilled person may be confronted with undesirable solidification of the PEC due to locally insufficient ionic strength (dilution by the aqueous (or solvent) phase of the polymer dispersions). This difficulty may sometimes be overcome by first dissolving a sufficient amount of water-soluble (or solvent-soluble) mineral salt in the aqueous (or solvent) phase of the polymer dispersion. In some cases, addition of mineral salts however may trigger destabilization and coagulation of the polymer dispersion. Addition of non-ionic surfactant for example may prevent this phenomenon.

If, for some reason, addition of mineral salts to the polymer dispersion prior to mixing it with the PEC turns out to be impossible or too complicated at industrial scale, redispersible polymer powders (for instance, redispersible polymer based on ethylene-vinyl acetate, ethylene-vinyl chloride, styrene-butadiene rubber, or silicone) may advantageously be used instead of aqueous polymer dispersions. Such solvent-free dispersible powders of organic polymer particles are commercialized for example under the references Vinnapas' 7150 E, Vinnapas^{®} 7055 E, Vinnapas^{®} 3030H by Wacker, and ELOTEX^{®} FX2630 by Celanese. The redispersible polymer may in particular represent at least 5%, for instance at least 10%, or even at least 20%, and advantageously at most 30%, for instance at most 25%, by weight with respect to the total weight of the composition.

The composition may further comprise a hydrophobic agent, typically added as an emulsion. The hydrophobic agent may be a wax, for example paraffin wax, polyethylene wax, polypropylene wax, silicone wax and poly(tetrafluoroethylene) wax. Hydrophobic resins, for example hydrophobic silicone resins such as Variphob^{®} AC 3030, may also efficiently be used as hydrophobic agents.

The hydrophobic agent is typically used in amounts up to 15 % by weight, preferable comprised between 1 % and 15 % by weight, more preferably between 2 and 10 % by weight, and still more preferably between 3 and 5 % by weight, with respect to the total dry weight of the composition. The composition may further comprise up to about 20 %, preferably from 0.1 to about 10 % (by weight, based on the total weight of the composition) of one or more additives different from the ones mentioned above. Those additives are selected for examples from the group consisting of cosolvents such as ethanol and polyethyleneglycol, dyes, pigments, biocides, buffer agents, surfactants, dispersants and thickening agents. Another additive is for instance an antifoaming agent.

The composition may further comprise one or more plasticizers, preferably in an amount comprised between 0.1 and 10 % by weight, with respect to the total dry weight of the composition. Advantageously, the composition is an ammonia-free composition.

Advantageously, the composition is solvent-free.

Advantageously, the composition has a water content of from 15 to 80 % by weight, preferably of from 20 to 75 % by weight, more preferably of from 25 to 70 % by weight.

The compositions used in the method of the present invention may be prepared by first dissolving each of the cationic and anionic polyelectrolytes separately in an aqueous solution of the mineral salt. The salt concentration is typically comprised between 0.05M and 6 M, preferably between 0.2 and 2.5 M, and more preferably between 0.5 and 2.0 M. The higher the molecular weight of the polyelectrolyte, the higher must be the ionic strength of the salt solution. Hence, for weight average molecular weights of less than 100 000 Da, salt concentrations of between 0.2 and 1 M should be sufficient. For dissolving polyelectrolytes with weight average molecular weights above 400 000, salt concentration of more than 1.8 M will be required.

The pH of both polyelectrolyte solutions may be from 0.5 to 14, for instance between 0,5 and 6.

After complete dissolution of the polyelectrolytes, the two solutions are simply mixed together. A polymer-rich dense phase, called coacervate, will separate from a polymer-depleted surfactant phase. The two phases can be easily separated, optionally after centrifugation of the mixture. When working at an industrial scale, it is of course interesting to minimize the volume fraction of the supernatant phase. This can be done by increasing the polyelectrolyte concentration and salt concentration in the two solutions prior to mixing. It is very important to always remove the supernatant after phase separation otherwise the composition will not cure after contact with water.

The solid fraction of the coacervate (polyelectrolytes and mineral salt) is typically comprised between 20 and 35 % by weight, preferably between 25 and 30 % by weight.

When present, the polyphenols are preferably added to the cationic polyelectrolyte solution, prior to or after dissolving the polycation. Addition of the polyphenols to the polyanion solution leads to undesirable gelation of the solution. When present, the polyphenols may be added as such, in non-diluted form or may first be dissolved in an aqueous solution of the mineral salt.

When present, the water-soluble salt of a transition metal is preferably added to the solution comprising the cationic polyelectrolyte and optionally the polyphenol, in powder form or as an aqueous solution.

When present, the particulate filler and the other ingredients, such as the optional organic polymer particles, hydrophobic agent, and other additives are typically added to the coacervate after removal of the supernatant. They may be introduced either in dry form or dispersed or dissolved in an aqueous salt solution having an ionic strength similar to that of the coacervate.

If desired, pH of the composition may be neutralized to pH 5 - 9, preferably pH 6 - 8, after or before addition of the particulate filler and the other optional ingredients.

The composition used in the method of the present invention is typically a mono-component composition.

The composition as described above is particularly suitable for being used in a method for sealing a leaking underground structure.

Thus, the present invention relates to a method for sealing a leaking underground structure comprising: i) injecting a composition as defined herein into a water leak of the leaking underground structure, and ii) contacting said composition with water of the water leak.

As used herein, the "underground structure" refers to any construction that is built beneath the surface of the Earth, either partially or entirely. The underground structure may also be called a below-grade structure or subterranean structure. The underground structure is usually a structure made of (or essentially made of) concrete, rock, steel, or a combination thereof.

Preferably, the underground structure is selected from:
- tunnels such as subway tunnels, utility tunnels, microtunnels, road or rail traffic tunnels
- parkings, train stations, subway stations,
- basements, building foundations,
- shafts, and
- galleries in mines.

The underground structure generally features a cavity.

More specifically, the underground structure generally comprises:
- an external surface, which is in contact with the ground, and
- an internal surface, which defines at least in part (for instance, totally) said cavity.

The external surface is usually called an extrados. The internal surface is usually called or comprises a portion usually called an intrados.

The ground usually comprises soil particles, rocks, earth masses, gravel, slag, stones, strata, or any mixture thereof.

The water leak may be defined as a path extending between an internal surface and an external surface of the underground structure, and through which water (from a water source) is flowing. In other words, the underground structure features a through-hole extending between an internal surface and an external surface of the underground structure, such through-hole defining the leak. The through-hole typically features:
- an inlet, through which water from a water source enters the through-hole, and
- an outlet, through which water from the water source leaves the through-hole.

Such water typically comes from a water source in the ground and typically leaks from the ground to the cavity of the underground structure, through the through-hole.

The water source may be a static source or a flowing source, preferably a flowing source. Examples of water sources include, but are not limited to, groundwater, aquifer, or infiltration of rainwater. The water source may flow laterally or orthogonally to an external surface of the underground structure. In a preferred embodiment, the water source flows laterally to an external surface of the underground structure.

Preferably, the pressure of water of the water leak is from 1 to 200 bar, preferably from 1 to 20 bar. The pressure of water is typically measured at an outlet of the leak (or of the through-hole defining the leak) by using a manometer.

In some embodiments, the velocity of water of the water leak is from 0.1 to 10 m/s.

In step i) of the method of the invention, a composition as defined herein is injected into a water leak of the leaking underground structure. Typically, the composition is injected into the leak through an outlet of the leak (or of the through-hole defining the leak). The composition may be injected into part or all of the volume of the through-hole defining the leak.

When water leaks from the ground to the cavity, through the through-hole, the composition may be injected into all of the volume of the through-hole defining the leak, and further into a part of the ground.

The composition used in the method of the invention shows an immediate setting even at low temperatures. The temperature of the water of the water leak may be from 0.5 to 50°C, preferably from 1 to 25°C, for instance from 3 to 20°C.

The composition can be injected by using a suitable device ("injection device"), typically an injection pump, such as hand pumps, high pressure pumps, or high volume pumps.

Advantageously, the composition is injected into a water leak of the leaking underground structure at an injection pressure from 1 to 200 bar, preferably from 1 to 50 bar. The injection pressure can be controlled by the injection device.

In step b), contacting of the composition with the water of the water leak allows the setting of the composition, and thereby the sealing of the water leak.

The present invention is illustrated by the following non-limiting examples.

### EXAMPLES

### 1. Preparation of a PEC composition with KBr as mineral salt (Composition A)

1092g of a diluted polycation poly(diallyldimethylammonium chloride) (PDADMAC - EVA462, SNF) at a solid content of 20wt% is added to a mixture of 419g of tap water, 2.0g of HCl at 6M and 428g of solid potassium bromide salt (KBr, 99% purity). The mixture is stirred using a dissolver. Once all salt is dissolved after 1h at room temperature, then 2.2g of tannic acid is added. Once all the acid is dissolved and the pH is below 2, 36mg of iron chloride is added to the mixture. After 15min, 938g of polyanion polystyrene sulfonate (PSS - Versal TL 130) at a solid content of 30wt% is added slowly to the mixture of salt, HCl, Tannic acid, PDADMAC, iron chloride and water. Details of the composition are presented in the following table 1.

**Table 1**

| | Weight (g) | Weight (%) |
|---|---|---|
| Water | 419 | 14.5 |
| Wet PDADMAC | 1092 | 37.9 |
| Wet PSS | 938 | 32.6 |
| KBr | 428 | 14.9 |
| Tannic acid | 2.2 | 0.076 |
| Iron chloride | 0.36 | 0.012 |
| Total | 2880 | 100 |
| Total Water | 1949 | 67.7 |
| Dry PDADMAC/Total (%) | 11 | |
| Dry PSS/Total (%) | 14 | |
| Total dry polymer/Total composition (%) | 26 | |

The pH of of the final composition - "Composition A" - was 2.5, and its viscosity measured with a Brookfield viscometer (Spindle 05, 50 rpm) at 25°C was 3800 mPa.s.

### 2. Preparation of a reinforced-PEC with KBr as mineral salt (Composition B)

Another PEC was prepared according to the same procedure as Composition A. Then, the pH was increased to 6.5 by addition of 2-amino-2-methyl-1-propanol (AMP 95) and 85 g of KBr 3.5M was added. The composition was further diluted with 5 wt% of KBr aqueous solution (2.5 M). The viscosity of the final composition - "Composition B" - measured with a Brookfield viscometer (Spindle 05, 50 rpm) was 2570 mPa.s at 25°C.

### 3. Preparation of a PEC with KBr as mineral salt (Composition C)

1092g of a diluted polycation poly(diallyldimethylammonium chloride) (PDADMAC - EVA462, SNF) at a solid content of 20wt% is added to a mixture of 466g of tap water and 428g of solid potassium bromide salt (KBr, 99% purity). The mixture is stirred using a dissolver. Once all salt is dissolved after 1h at room temperature, 938g of polyanion polystyrene sulfonate (PSS - Versal TL 130) at a solid content of 30wt% is added slowly to the mixture of salt, PDADMAC and water. Details of the composition are presented in the following table 2.

**Table 2**

| | Weight (g) | Weight (%) |
|---|---|---|
| Water | 466 | 15.9 |
| Wet PDADMAC | 1092 | 37.3 |
| Wet PSS | 938 | 32.1 |
| KBr | 428 | 14.6 |
| Tannic acid | 0 | 0 |
| Iron chloride | 0 | 0 |
| Total | 2924 | 100 |
| Total Water | 1996 | 68.3 |
| Dry PDADMAC/Total (%) | 11 | |
| Dry PSS/Total (%) | 14 | |
| Total dry polymer/Total composition (%) | 25 | |

The pH of of the final composition - "Composition C" - was 6.8, and its viscosity measured with a Brookfield viscometer (Spindle 05, 50 rpm) at 25°C was 2500 mPa.s.

### 5. Sealing a water leak using compositions A-C and comparative composition D

Injection test tubes (inner diameter: 53 mm, 2,5 m long), packed with broken porphyre gravel of grain size 2 - 6mm, were used to simulate soil. In this experiment, a continuous water flow (~ 9 L.min⁻¹ ; velocity ~ 0.18 m/s; T_{water} = 15°C) was induced in the tube to simulate a leak. The injection points are 30cm downstream from the water inlet. The injection points are made by drilling an 18 mm diameter hole in the pipe. An injection packer of suitable diameter is installed in the hole. Consequently, compositions A-C were injected at a pressure of 6 bar in the gravel bed through a pressured injection pipe connected to the injection packer. The ability of the resin (obtained upon contact of the composition with water) to block leaks was assessed by its ability to reduce or even stop the water flow.

A comparative test, using a PU resin, was performed under similar conditions (Composition D). "Composition D" is a commercially available product, called DE NEEF HA Cut AF with the addition of 10 % of an accelerator called HA Cut Cat SXF AF. At 25°C the viscosity of this mixture of resin and accelerator is approximately 200 mPa.s.

Such tests showed that only 400 mL of compositions A-C were needed to stop the water flow. Also, with such compositions A-C, less than 10 seconds were needed to stop such water flow.

On the contrary, 2 L of comparative composition D were required to stop the water flow.

## Claims

1. A method for sealing a leaking underground structure comprising:
i) injecting a composition into a water leak of the leaking underground structure, and
ii) contacting said composition with water of the water leak,
wherein said composition comprises a cationic polyelectrolyte, an anionic polyelectrolyte, a water-soluble mineral salt, and water.

2. The method according to claim 1, wherein the underground structure is selected from:
- tunnels such as subway tunnels, utility tunnels, microtunnels, road or rail traffic tunnels,
- parkings, train stations, subway stations,
- basements, building foundations,
- shafts, and
- galleries in mines.

3. The method according to claim 1 or 2, wherein said injecting is carried out at an injection pressure from 1 to 200 bar, preferably from 1 to 50 bar.

4. The method according to any one of claims 1 to 3, wherein the water pressure of the water leak is from 1 to 200 bar, preferably from 1 to 20 bar.

5. The method according to any one of claims 1 to 4, wherein the water-soluble mineral salt is selected from the group consisting of alkaline metal or alkaline earth metal halogenides.

6. The method according to any one of claims 1 to 5, wherein the weight ratio of the total amount of cationic polyelectrolyte and anionic polyelectrolyte to the amount of water-soluble mineral salt is comprised between 0.10 and 4.0, preferably between 0.50 and 2.50, more preferably between 0.80 and 1.50.

7. The method according to any one of claims 1 to 6, wherein said composition further comprises a water-soluble polyphenol comprising at least one polyhydroxylated aromatic ring structure, and optionally a water-soluble polyvalent transition metal salt.

8. The method according to any one of claims 1 to 7, wherein the polyphenol comprises at least two, for instance at least three, polyhydroxylated aromatic ring structures, said polyphenol being preferably tannic acid.

9. The method according to any one of claims 1 to 8, wherein the ratio of the number of positive charges of the cationic polyelectrolyte to the number of negative charges of the anionic polyelectrolyte in the composition is comprised between 0.5 and 2.0, preferably between 0.6 and 1.8, more preferably between 0.7 and 1.6, even more preferably between 0.9 and 1.2.

10. The method according to any one of claims 1 to 9, wherein the cationic and anionic polyelectrolytes together represent from 1 % to 45 %, preferably from 2 % to 40 %, more preferably from 3 % to 40 %, even more preferably from 4 to 40 %, more particularly from 5 % to 35 %, for instance from 8 % to 30 % of the total weight of the composition.

11. The method according to any one of claims 1 to 10, wherein the cationic polyelectrolyte is selected from the group consisting of
- poly(diallyldimethylammonium chloride) (PDADMAC),
- poly[ (2-hydroxypropyl)dimethylammonium chloride],
- polyamidoamine-epichlorhydrine (PAAE),
- polyethyleneimine,
- poly(acrylamide-co-diallyldimethylammonium chloride),
- copolymer of hydroxyethylcellulose and poly(diallyldimethylammonium chloride) (Polyquaternium-4),
- copolymer of acrylamide and dimethylaminoethylmethacrylate quaternized with dimethyl sulphate (Polyquaternium-5),
- copolymer of dimethylaminomethyle methacrylate and alkyl methacrylate
- chitosan,
- poly(quaternized N,N-(dimethylamino)ethyle methacrylate),
- guar hydroxypropyltrimonium chloride,
- poly(N,N-dimethyl-3,5-dimethylene piperidinium chloride),
- poly(vinylbenzyltrimethylammonium chloride),
- poly[3-(methacryloylamino)propyl-trimethylammonium chloride],
- poly([2-(methacryloloxy)ethyl]-trimethylammonium chloride),
- polyvinylamine (PVA),
- poly(N,N-dimethyl-3,5-dimethylene piperidinium chloride) (PDDPC),
- poly(vinylbenzyltrimethylammonium chloride) (PVBTAC),
- poly(allylamine chloride) (PAH),
- poly[3-(methacryloylamino)propyltrimethylammonium chloride] (PMAPTAC), and
- cationic dextran.

12. The method according to any one of claims 1 to 11, wherein the anionic polyelectrolyte is selected from the group consisting of the salts, preferably sodium salts, of poly(acrylic acid), poly(acrylic acid-co-acrylamido), poly(4-styrene-sulfonic acid), lignosulfonic acid, humic acid, alginic acid, poly(2-acrylamido-2-methyl-1-propanesulfonic acid), hyaluronic acid, poly(vinylsulfonic acid), and dextran-sulfate.

13. The method according to any one of claims 1 to 12, wherein the composition has a water content of from 15 to 80 % by weight, preferably of from 20 to 75 % by weight, more preferably of from 25 to 70 % by weight.

14. The method according to any one of claims 1 to 13, wherein the composition further comprises particulate fillers, the amount of particulate filler being preferably comprised between 5 % and 80 % by weight, preferably between 10 and 70 % by weight, more preferably between 15 and 60 % by weight, with respect to the total dry weight of the composition.

15. The method according to any one of claims 1 to 14, wherein the composition further comprises particles of organic polymer, the organic polymer preferably being selected from acrylic polymers, styrene-acrylic polymers, styrene-butadiene polymers, chloroprene, natural rubber and polyvinyl acetal polymers, and the ratio of the amount of organic polymer to the total amount of cationic and anionic polyelectrolytes being preferably comprised between 0.5/1 and 7/1, more preferably between 0.5/1 and 5/1, even more preferably between 0.7/1 and 3/1, more particularly between 1/1 and 2/1.
